# EUROPEAN PATENT SPECIFICATION

(11) **EP 4 159 093 B1**
(45) Date of publication and mention of the grant of the patent: **28.01.2026**
(21) Application number: 21200679.5
(22) Date of filing: 04.10.2021
(51) Int. Cl.: A47J 27/00

(54) **INTEGRATED COOKING SYSTEM**
INTEGRIERTES KOCHSYSTEM
SYSTÈME DE CUISSON INTÉGRÉ

(43) Date of publication of application: 05.04.2023
(73) Proprietor: BSH Hausgeräte GmbH, 81739 München (DE)
(72) Inventor: Blatnik, Gregor, 2381 Podgorje (SI); Brinovsek, Luka, 2259 Ivanjkovci (SI); Pacnik, Roman, 2383 Smartno pri Slovenj Gradcu (SI)

(56) References cited:
- CN-A- 113 455 920
- CN-U- 206 044 339
- DE-A1- 102019 211 284
- DE-A1- 102020 203 520
- DE-U1- 202011 050 875
- US-A1- 2020 187 697

## Description

The invention relates to an integrated cooking system. In particular, the invention relates to the controlling heating a cooking receptacle as a function of its temperature.

An integrated cooking system comprises a cooking receptacle for receiving food, a heating device and a temperature sensor for determining a temperature of the cooking receptacle. A control device is set up to control the heating device as a function of a temperature determined by means of the temperature sensor. For example, water absorbed in the cooking receptacle can be quickly brought to the boil or a sauce can simmer over some time.

Different cooking methods heat different areas of the cooking receptacle to different degrees. For example, a liquid in the cooking receptacle is heated approximately uniformly, while during frying a high temperature is only reached in the vicinity of a bottom of the cooking receptacle. Different temperature sensors may therefore be provided on a conventional cooking system, which, for example, separately determine the temperature of a base and a wall of the cooking receptacle. Different types of sensors can be used, for example an NTC (negative temperature coefficient) resistor, a semiconductor or a radiation sensor. Two known cooking aid devices are disclosed in the documents DE102020203520A1 and DE102019211284A1.

The different sensors can be complex to integrate into a control of the cooking system. In addition, the multiple sensors can increase manufacturing costs of the cooking system. A probability of a defect in at least one of the sensors can be increased.

One object of present invention is to provide an integrated cooking system which can react in an improved manner to a temperature of the cooking receptacle. The invention solves this problem by means of the subjects of the independent claims. Dependent claims show preferred embodiments.

According to a first aspect of the present invention, an integrated cooking system according to claim 1 is defined.

The heating device can thus be controlled in an improved manner as a function of a temperature at a predetermined section, a temperature profile or a distribution of temperatures over the sections. In particular, temperatures at different sections on the outer surface of the receptacle can be taken into account for different cooking methods. Exemplary cooking methods include boiling, frying, deep-frying, or steaming.

The temperature sensor is configured to determine a temperature on the basis of thermal radiation. The temperature sensor can be attached at a predetermined distance from the receptacle. The temperature sensor is preferred to be at a predetermined horizontal distance from the receptacle in order to reduce its influence by heat conduction from the receptacle or the heating device.

A number of vertically offset sections or positions can be predetermined on the receptacle, from each of which a thermal radiation or infrared radiation may emanate as a function of a temperature on the inside. By determining the temperature on the basis of thermal radiation, any influence on the temperature to be measured can be minimized. Depending on a measuring range, a resolution or an accuracy, the temperature sensor can be selected from an existing range of different temperature sensors.

In one embodiment, the temperature sensor is fixedly connected to the cooking system. For example, the cooking system can comprise a housing to which the heating device is connected, the temperature sensor being attached to the housing. In another embodiment, the temperature sensor can be designed as a loosely coupled independent device. The temperature sensor may be connected to the control device by means of a wireless communication link. The temperature sensor can be placed on the housing, removed from the housing or positioned at a suitable location by a user.

According to the invention, the temperature sensor comprises a vertical arrangement of radiation sensors for infrared radiation. One or more radiation sensors can each be assigned to a section predetermined on the receptacle. Infrared radiation of a predetermined section can be guided to one or more predetermined radiation sensors by means of a diaphragm or infrared optics.

In a particularly preferred embodiment, the temperature sensor comprises a two-dimensional arrangement of radiation sensors. The arrangement can, for example, be in the form of a matrix or a scatter. The arrangement may have any form, for instance rectangular or circular. It is generally preferred that a plurality of predetermined radiation sensors are assigned to a temperature to be determined in a predetermined region of the receptacle (M sensors corresponding to N sections; with M, N ≥ 2). The radiation sensors assigned to one of the sections can be attached adjacent to each other. The arrangement of radiation sensors can include, for example, a thermal imaging camera.

In a particularly preferred embodiment, a radiation sensor comprises a thermopile. The thermopile can represent a cost-effective solution for precise and calibration-free contactless temperature determination. A thermopile sensor can realize a temperature determination that is independent of a position, a surface to be scanned, vibrations, a movement of the cooking receptacle or electromagnetic interference.

The accuracy of a thermopile sensor can be in the range of approx. ± 2 Kelvin or less. Thermopile sensors with an accuracy of less than ± 1 Kelvin are also available. In another variant, the radiation sensor can comprise a micro bolometer. In this case, temperature stabilization can be provided for the temperature sensor, for example by means of a Peltier element. A mechanical shutter can be provided in order to temporarily cover the radiation sensors in order to obtain a dark image. This can be used as a sensor-specific reference for determining the temperature.

Optionally, the control device is set up to control the heating device as a function of a temperature in a predetermined vertical section. The section can be selected as a function of a predetermined cooking method or determined temperatures. If the food is to be cooked, it is possible, for example, to determine a temperature occurring in a vertically central region of the receptacle. If the food is to be fried, a temperature can be determined at a section which is close to a lower end or a bottom of the receptacle. If the food is partially or completely frozen and is to be thawed, a lowest or highest temperature on the receptacle can be used to control the heating device. The cooking method can be selected manually by a user.

According to the invention, the control device is set up to determine a distribution of temperatures at several sections. The heating device can then be controlled as a function of the vertical distribution of temperatures on the receptacle. Other facts can also be determined on the basis of the distribution. For example, a cooking method can be automatically determined on the basis of the distribution. During cooking, the temperatures of the food in the receptacle can be evenly distributed or form an essentially linear gradient. During frying, a high temperature can be present near a lower end of the receptacle, while lower temperatures may prevail in an upper area. Other cooking methods can also be specified.

In both variants, a temporal development of temperatures in one or several sections may be used as basis for controlling the heater.

In a further development of the invention, the control device is set up to turn off the heating device upon determining a predetermined distribution of temperatures. For example, an inadmissible cooking method for which the cooking system is not configured can be determined on the basis of the distribution of temperatures. If, for example, an attempt is made to deep-fry with the cooking system, temperatures of approx. 140 ° C or higher can be determined in several vertical sections of the receptacle. The cooking system can in particular comprise a plastic part in an upper area, for example a lid, which cannot withstand such temperatures. The cooking system may also include parts that cannot withstand temperatures that could occur in a grease fire.

The control device can be set up to determine a filling level of the food in the receptacle on the basis of a distribution of temperatures. The filling level is usually found at the point on the receptacle where the temperature gradient over the vertically offset sections is greatest. In other words, the food usually comprises a liquid which can be heated more strongly by the heating device than an overlying air. The greatest temperature gradient can develop between sections of the receptacle, of which the lower one is in contact with the food and the upper one is not. The filling level can also be determined on the basis of temporal temperature gradients in the different sections, as a section under the filling level may be heating faster than a section above said level.

The cooking system may be configured to guide a user through processing steps for preparing a predetermined dish. For this purpose, the cooking system can also include further sensors and / or actuators. By determining the filling level on the basis of the temperatures, another measured value can be provided that can monitor the progress of the preparation of the dish. The user can be instructed in an improved manner to prepare the dish. A deviation from a predetermined processing step or too large or too small a quantity of an ingredient can be determined at an early stage.

According to the invention, the control device is set up to determine a viscosity of the food on the basis of a distribution of temperatures. In the case of low-viscosity food, for example water, temperatures at the vertically offset sections of the receptacle can be essentially the same. If the food is more viscous, larger temperature differences can appear between vertically offset sections on the receptacle. An average viscosity can be assumed for an inhomogeneous food such as Goulash.

The viscosity can also be included as a parameter in the monitoring of the correct preparation of a predetermined food or a predetermined dish. The heater may be controlled based on viscosity. For example, it can be prevented that a high-viscosity food is already scorched in a section near the heating device, while only a low temperature is achieved in a higher section.

According to a further embodiment, the cooking system comprises an agitator for mechanically putting the food in the receptacle in motion. The motion may be for instance circular, linear or oscillating. The control device may be set up to control the agitator as a function of a distribution of temperatures. The agitator can for example comprise a stirrer or a similar device which can move and in particular stir the food in the receptacle. The agitator can in particular be controlled as a function of a previously determined filling level or a viscosity of the food. In this way, the food can be gently heated evenly.

According to a further aspect of the present invention, a method for controlling an integrated cooking system with a receptacle for holding food and a heating device for heating said food comprises steps of determining temperatures at a plurality of vertically offset sections of the receptacle; and controlling the heating device as a function of a determined temperature.

The method can be implemented in part or in whole using a cooking system described herein. For this purpose, the method can be present as a computer program product with program code means. The cooking system and in particular a control device comprised by it can comprise a microprocessor or microcomputer which is set up to execute the computer program product. The computer program product can also be stored on a computer-readable data carrier. Advantages or features of the method can be transferred to the cooking system and vice versa.

The invention will now be described in more detail with reference to the accompanying figures, in which:
- Figure 1: represents a schematic representation of an exemplary integrated cooking system;
- Figure 2: shows an exemplary temperature sensor on a cooking receptacle;
- Figure 3: shows a flow chart of an exemplary method; and
- Figure 4: shows exemplary temperature curves.

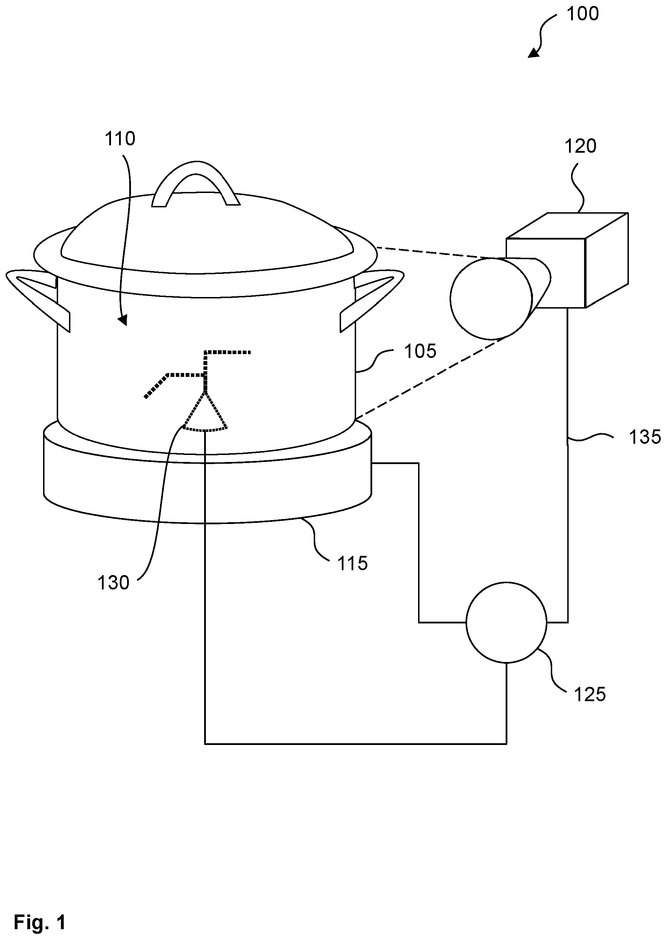

Figure 1 shows a schematic illustration of an exemplary integrated cooking system 100. The cooking system 100 can also comprise components other than or in addition to those shown. An exemplary cooking system 100 is available under the name Cookit.

The cooking system 100 comprises a cooking receptacle 105 for receiving a food 110, a heating device 115 for heating the food 110; a temperature sensor 120 and a control device 125. The receptacle 105 may comprise a pot, a pan or a similar cooking vessel and may optionally comprise a lid. The receptacle 105 may be made from a heat resistant material like non corrosive steel. The material may be heat conductive enough that an outside temperature gives an indication of an inside temperature when the receptacle 105 is heated and food 110 is prepared. In one option, the heating device 115 is integrated with the receptacle 105. The control device 125 is set up to determine a temperature of the cooking receptacle 105 by means of the temperature sensor 120 and to control the heating device 115 as a function of a determined temperature. Heating can also be controlled as a function of an intended cooking method, a result to be achieved, an amount of the food 110 received in the cooking receptacle 105 or another parameter that is relevant to cooking the food 110. The cooking system 100 preferably further comprises a circulating device 130, for example in the form of an agitator 130. The agitator 130 may be integrated into the receptacle 105.

The temperature sensor 120 can be designed to be integrated with another component of the cooking system 100. In this case, a communication link 135 between the sensor 120 and the control device 125 can be implemented in a conventional wired manner. In another embodiment, the temperature sensor 120 is movable relative to the other components and can form its own device. In this case, the communication link 135 is preferably wireless. A battery can be provided for powering the temperature sensor 120.

The temperature sensor 120 is preferably set up to carry out a contactless temperature determination on the outer surface of the receptacle 105. The temperature sensor 120 can determine temperatures at several sections or positions on the surface of the cooking receptacle 105 at the same time, for example in the manner of a thermal imaging camera.

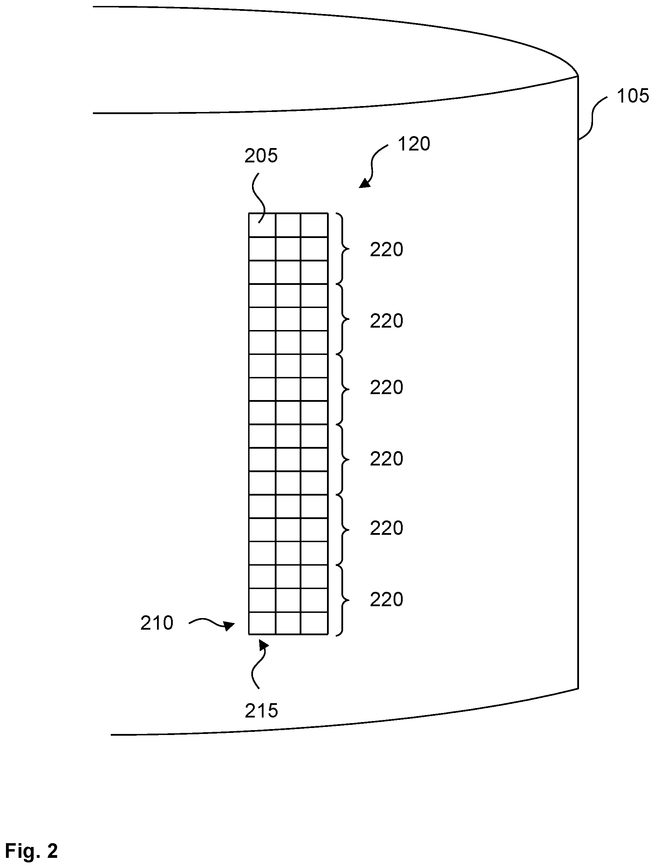

Figure 2 shows an exemplary temperature sensor 120 on a cooking receptacle 105. The temperature sensor 120 comprises a plurality of infrared radiation sensors 205, each of which can be constructed, for example, in the manner of a thermopile, a bolometer or a micro bolometer. The illustrated radiation sensors 205 are arranged, by way of example, in a matrix-like arrangement in rows 210 and columns 215. A section 220 on an outer wall of the cooking receptacle 105 is assigned to one or more radiation sensors 205. The sections 220 are offset vertically on the cooking receptacle 105 and can be in the immediate vicinity of one another or with relative spaces. Sections 220 may also be horizontally offset.

In the embodiment shown, the temperature sensor 120 is arranged at a horizontal distance from the cooking receptacle 105. Optics, an arrangement of screens or a perforated grid can be set up to make a connection between sections 220 and radiation sensors 205. It is generally preferred that the arrangement of radiation sensors 205 comes as an integrated component.

A plurality of radiation sensors 205 can be assigned to each section 220. In the present case, the sections 220 are of the same size, directly adjoin one another in the vertical direction, and an arrangement of nine radiation sensors 205 in three rows 210 and three columns 215 is assigned to each section 220. Other assignments are also possible.

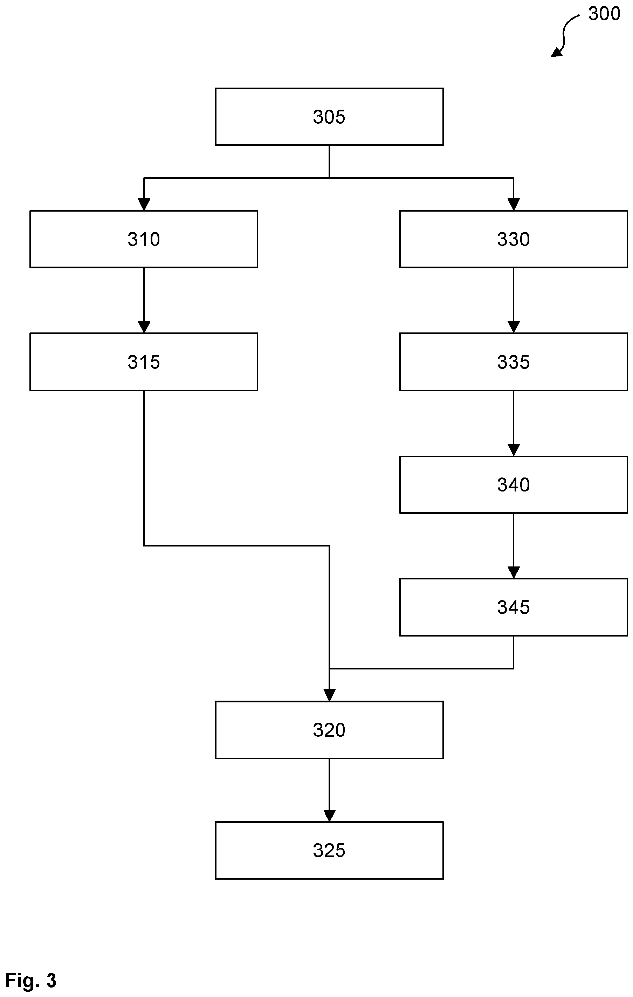

Figure 3 shows a flow chart of an exemplary method 300 that can be carried out in particular by means of an integrated cooking system 100. In a step 305, temperatures can be sampled at a plurality of vertically offset positions or sections 220. In a step 310, a temperature at a predetermined one of the sections 220 can be determined. The selection of the section 220 can be performed as a function of a desired cooking method or another parameter. In a step 315 it can be determined whether the determined temperature is permissible. Should the determined temperature exceed a predetermined threshold value or lie below another predetermined threshold value, a fault in the cooking system 100 or an impermissible operation of the cooking system 100 can be concluded.

In a step 320, the heating device 115 can be controlled as a function of the determined temperature. If an impermissible temperature has been determined, the heating device 115 can be restricted in its output and, in particular, switched off. Otherwise, the output of the heating device 115 can be adapted to the specific temperature.

In a step 325, the agitator 130 can optionally be activated in order to circulate or stir the food 110 in the cooking receptacle 105. A movement of the agitator 130 can be controlled as a function of the specific temperature or a deviation of the specific temperature from a predetermined temperature.

The heating device 115 and / or the circulating device 130 can, also be controlled on the basis of a plurality of temperatures at different sections 220 of the cooking receptacle 105. In particular, in a step 330, a spatial distribution of temperatures in several sections 220 of the cooking receptacle 105 can be determined. In a subsequent step 335 it can be determined whether the distribution of temperatures is permissible. The distribution may be inadmissible if it indicates an over or under temperature in one or more sections 220. The distribution may also be impermissible if it indicates an impermissible cooking method. The applied cooking method can be determined on the basis of the distribution. An impermissible way of cooking can in particular include deep-frying, which may involve higher temperatures in a range between the bottom and a predetermined section 220 of the receptacle 105. Deep frying may cause temperatures of approx 140 ° C or more in said range.

In a step 340, a filling level of the food 110 in the cooking receptacle 105 can be determined on the basis of the distribution of temperatures in the sections 220. The filling level can in particular be determined in an area in which a maximum temperature gradient can be observed over two or more vertically adjacent sections 220.

In a step 345, a viscosity of the food 110 can be determined. A low viscosity can be present if the specific temperatures at the sections 220 are similar. A high viscosity can exist if, after a predetermined exposure time of the heating device 115, a significantly higher temperature prevails in the lower area than in the upper area of the food 110.

The control of the heating device 115 in step 320 and / or the control of the agitator 130 in step 325 can take place as a function of the parameters determined on the basis of the distribution of temperatures over the vertically distributed regions 220.

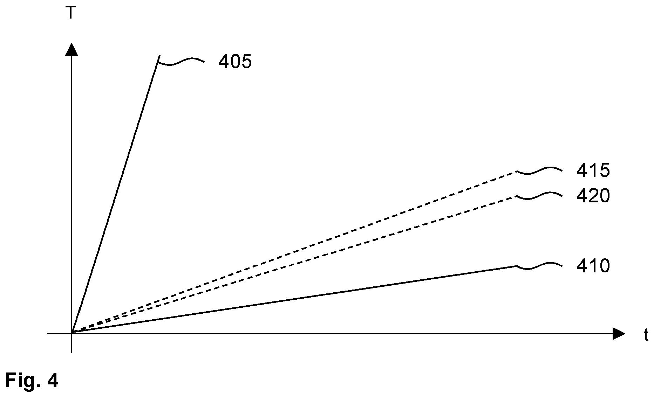

Figure 4 shows exemplary temperature curves. A horizontal direction represents time and a vertical direction represents a temperature. A first curve 405 shows the temperature development in a lower region of the cooking receptacle 105 close to the bottom and a second curve 410 in an upper region closer to the edge. The level of the food 110 in the receptacle 105 is above the upper section 220 and the food 110 is not stirred mechanically, so that the shown temperature gradients are set due to heat conduction and convection when the food 110 is heated through the heating device 115.

The gradients 405 and 410 develop with different steepnesses and the sections 220 are heated at different rates. From this it can be concluded that the food 110 on which it is based has a high viscosity. For example, the food 110 could include Chili or a thick stew. Since the first curve 405 reaches a high temperature very quickly, it is advisable to stir in order to prevent it from sticking or burning and to promote even heating. In one embodiment, the agitator 130 can be controlled in such a way that temperatures in the different zones do not differ from one another by more than a predetermined amount. The further the temperatures deviate from one another, the stronger or faster a mechanical agitation can be controlled by means of the device 130.

The strength or speed of the agitation can also depend on the temperature in the lower range. The higher this temperature, the harder the food 110 can be stirred. In this way it can be prevented that the temperature close to the bottom locally exceeds a predetermined temperature at which contact or burning is to be expected. This temperature can be dependent on a viscosity of the food 110. The more viscous the food 110, the higher the predetermined temperature can be. The predetermined temperature can be limited to approx. 100 ° C.

A third curve 415 relates to the lower section 220 and a fourth curve 420 relates to the upper section 220 with different food 110. Here, there is obviously a stronger thermal mixing and the sections 220 are heated at a similarly rapid rate. From this it can be concluded that the food 110 inside the receptacle has a low viscosity. An exemplary food 110 with the characteristics shown could include Bouillon or pasta in salted water. There may be no need to mechanically stir or agitate the food 110.

### Reference Signs

- 100: cooking system
- 105: receptacle, cookware
- 110: food
- 115: heater
- 120: temperature sensor
- 125: control device
- 130: circulating device, agitator, stirrer
- 135: communication link

- 205: radiation sensor
- 210: line
- 215: column
- 220: section

- 300: method
- 305: sample temperatures at vertically offset sections
- 310: determine a temperature
- 315: temperature permissible?
- 320: control heating device
- 325: control stirrer
- 330: determine a distribution of temperatures
- 335: distribution permissible?
- 340: determine fill level
- 345: determine viscosity

- 405: first curve (section near bottom, food with high viscosity)
- 410: second curve (higher section, food with high viscosity)
- 415: third curve (section near bottom, food with low viscosity)
- 420: fourth curve (higher section, food with low viscosity)

## Claims

1. Integrated cooking system (100), comprising:
- a receptacle (105) for holding food (110);
- a heater (115) for warming the food (110);
- a temperature sensor (120) for determining a temperature of said receptacle (105); und
- a control device (125) for controlling said heater (115) in accordance with a determined temperature;
- the temperature sensor (120) is adapted to determine temperatures in different, vertically offset sections of said receptacle (105) and comprises a vertical array of sensors (205) for infrared radiation, wherein
- the control device (125) is adapted to determine a temperature distribution in different sections (220);
**characterized in that**
- in the control device (125) is adapted to determine a viscosity of the food (110) on the basis of a distribution of temperatures.

2. Cooking system (100) according to claim 1, wherein the temperature sensor (120) is mounted in a predetermined distance to the receptacle (105) and adapted to determine a temperature on the basis of thermal radiation.

3. Cooking system (100) according to claim 1 or 2, wherein the temperature sensor (120) is connected to the control device (125) with a wireless communication link (135).

4. Cooking system (100) according to claim 3, wherein a radiation sensor (205) comprises a thermopile.

5. Cooking system (100) according to one of the above claims, wherein the control device (125) is adapted to control the heater (115) according to a determined temperature in a predetermined section (220).

6. Cooking system (100) according to claim 1, wherein the control device (125) is adapted to turn off the heater (115) upon determining a predetermined distribution of temperatures.

7. Cooking system (100) according to one of claims 1 or 6, wherein the control device (125) is adapted to determine a level of the food (110) in the receptacle (105) on the basis of a distribution of temperatures.

8. Cooking system (100) according to one of claims 1 through 7, further comprising an agitator (130) for mechanically putting the food (110) inside the receptacle (105) in motion, wherein the control device (125) is adapted to control the agitator (130) in accordance with a distribution of temperatures.

9. Method (300) for controlling the integrated cooking system (100) according to any of the preceding claims with a receptacle (105) for holding food (110) and a heater (115) for heating said food (110); wherein said method (300) comprises steps of:
- determining (305) temperatures at several vertically offset sections (220) of the receptacle (105) by means of a temperature sensor (120) comprising a vertical array of sensors (205) for infrared radiation; and
- controlling (320) the heater (115) in accordance with determined temperature(s).

## Patentansprüche

1. Integriertes Kochsystem (100), das Folgendes umfasst:
- ein Gefäß (105) zum Aufnehmen von Speisen (110),
- ein Heizelement (115) zum Erwärmen der Speisen (110),
- einen Temperatursensor (120) zum Ermitteln einer Temperatur des Gefäßes (105) und
- eine Steuervorrichtung (125) zum Regeln des Heizelements (115) entsprechend einer ermittelten Temperatur,
- wobei der Temperatursensor (120) so ausgelegt ist, dass er Temperaturen in unterschiedlichen, vertikal versetzten Abschnitten des Gefäßes (105) ermittelt, und ein vertikales Array aus Sensoren (205) für Infrarotstrahlung umfasst, wobei
- die Steuervorrichtung (125) so ausgelegt ist, dass sie in verschiedenen Abschnitten (220) eine Temperaturverteilung ermittelt,
**dadurch gekennzeichnet, dass**
- die Steuervorrichtung (125) so ausgelegt ist, dass sie auf der Grundlage einer Temperaturverteilung eine Viskosität der Speise (110) ermittelt.

2. Kochsystem (100) nach Anspruch 1, wobei der Temperatursensor (120) in einem vorgegebenen Abstand zum Gefäß (105) installiert und so ausgelegt ist, dass er auf der Grundlage von Wärmestrahlung eine Temperatur ermittelt.

3. Kochsystem (100) nach Anspruch 1 oder 2, wobei der Temperatursensor (120) über eine kabellose Kommunikationsverbindung (135) mit der Steuervorrichtung (125) verbunden ist.

4. Kochsystem (100) nach Anspruch 3, wobei ein Strahlungssensor (205) eine Thermosäule umfasst.

5. Kochsystem (100) nach einem der vorhergehenden Ansprüche, wobei die Steuervorrichtung (125) so ausgelegt ist, dass sie das Heizelement (115) entsprechend einer in einem vorgegebenen Abschnitt (220) ermittelten Temperatur regelt.

6. Kochsystem (100) nach Anspruch 1, wobei die Steuervorrichtung (125) so ausgelegt ist, dass sie das Heizelement (115) ausschaltet, wenn eine vorgegebene Temperaturverteilung ermittelt wird.

7. Kochsystem (100) nach Anspruch 1 oder 6, wobei die Steuervorrichtung (125) so ausgelegt ist, dass sie auf der Grundlage einer Temperaturverteilung eine Höhe der Speise (110) in dem Gefäß (105) ermittelt.

8. Kochsystem (100) nach einem der Ansprüche 1 bis 7, das ferner ein Rührwerk (130) umfasst, mit dem sich die Speise (110) im Gefäß (105) mechanisch in Bewegung versetzen lässt, wobei die Steuervorrichtung (125) so ausgelegt ist, dass sie das Rührwerk (130) entsprechend einer Temperaturverteilung regelt.

9. Verfahren (300) zum Steuern des integrierten Kochsystems (100) nach einem der vorhergehenden Ansprüche mit einem Gefäß (105) zum Aufnehmen von Speisen (110) und einem Heizelement (115) zum Erhitzen der Speisen (110), wobei das Verfahren (300) folgende Schritte umfasst:
- Ermitteln (305) von Temperaturen an mehreren vertikal versetzten Abschnitten (220) des Gefäßes (105) mithilfe eines Temperatursensors (120), der ein vertikales Array aus Sensoren (205) für Infrarotstrahlung umfasst, und
- Regeln (320) des Heizelements (115) entsprechend der/den ermittelten Temperatur/en.

## Revendications

1. Système de cuisson intégré (100), comprenant :
- un réceptacle (105) pour contenir des aliments (110) ;
- un dispositif chauffant (115) pour chauffer les aliments (110) ;
- un détecteur de température (120) pour déterminer la température dudit réceptacle (105) ; et
- un dispositif de réglage (125) pour régler ledit dispositif chauffant (115) selon une température déterminée ;
- le détecteur de température (120) est conçu pour déterminer des températures dans différentes sections verticalement décalées dudit réceptacle (105) et comprend une série verticale de détecteurs (205) pour le rayonnement infrarouge, dans lequel
- le dispositif de réglage (125) est conçu pour déterminer une distribution des températures dans différentes sections (220) ;
**caractérisé en ce que**
- le dispositif de réglage (125) est conçu pour déterminer la viscosité des aliments (110) sur base d'une distribution des températures.

2. Système de cuisson (100) selon la revendication 1, dans lequel le détecteur de température (120) est fixé dans une distance prédéterminée par rapport au réceptacle (105) et propre à déterminer une température sur base du rayonnement thermique.

3. Système de cuisson (100) selon la revendication 1 ou 2, dans lequel le détecteur de température (120) est raccordé au dispositif de réglage (125) par le biais d'une liaison de communication sans fil (135).

4. Système de cuisson (100) selon la revendication 3, dans lequel un détecteur de rayonnement (205) comprend une thermopile.

5. Système de cuisson (100) selon l'une des revendications ci-dessus, dans lequel le dispositif de réglage (125) est conçu pour régler le dispositif chauffant (115) selon une température déterminée dans une section prédéterminée (220).

6. Système de cuisson (100) selon la revendication 1, dans lequel le dispositif de réglage (125) est conçu pour éteindre le dispositif chauffant (115) dès la détermination d'une distribution prédéterminée des températures.

7. Système de cuisson (100) selon l'une des revendications 1 ou 6, dans lequel le dispositif de réglage (125) est conçu pour déterminer un niveau des aliments (110) dans le réceptacle (105) sur base d'une distribution des températures.

8. Système de cuisson (100) selon l'une des revendications 1 à 7, comprenant en outre un agitateur (130) pour mettre en mouvement mécaniquement les aliments (110) à l'intérieur du réceptacle (105), dans lequel le dispositif de réglage (125) est conçu pour régler l'agitateur (130) en fonction d'une distribution des températures.

9. Procédé (300) de réglage du système de cuisson intégré (100) selon l'une quelconque des revendications précédentes comprenant un réceptacle (105) pour contenir des aliments (110) et un dispositif chauffant (115) pour chauffer lesdits aliments (110) ; dans lequel ledit procédé (300) comprend les étapes suivantes :
- la détermination (305) des températures à différentes sections verticalement décalées (220) du réceptacle (105) au moyen d'un détecteur de température (120) comprenant une série verticale de détecteurs (205) pour le rayonnement infrarouge, et
- le réglage (320) du dispositif chauffant (115) selon une ou des températures déterminées.
